# FASCICULE DE BREVET EUROPEEN

(11) **EP 4 128 280 B1**
(45) Date de publication et mention de la délivrance du brevet: **13.03.2024**
(21) Numéro de dépôt: 21713955.9
(22) Date de dépôt: 24.03.2021
(51) Int. Cl.: G21C 19/18, G21C 19/32, G21D 1/02, B66C 19/00, G21C 19/02

(54) **PLATEFORME ET SYSTÈME DE PLATEFORME POUR CENTRALE NUCLÉAIRE**
PLATTFORM UND PLATTFORMSYSTEM FÜR EIN KERNKRAFTWERK
PLATFORM AND PLATFORM SYSTEM FOR A NUCLEAR POWER PLANT

(30) Priorité: 26.03.2020 FR 2002974
(43) Date de publication de la demande: 08.02.2023
(73) Titulaire: Framatome, 92400 Courbevoie (FR)
(72) Inventeur: LE GALL, Lionel, 69100 Villeurbanne (FR); REIS, Jérémy, 01700 Beynost (FR); JANKOWIAK, Christophe, 13100 Aix en Provence (FR); MAJD, Jaâfar, 13001 Marseille (FR)
(74) Mandataire: Lavoix
(86) Numéro de dépôt international: PCT/EP2021/057576
(87) Numéro de publication internationale: WO 2021/191279

(56) Documents cités:
- CH-A2- 705 953
- CN-U- 203 820 313
- US-A- 5 085 824

## Description

La présente invention concerne une plateforme pour centrale nucléaire, en particulier pour la maintenance d'un réacteur nucléaire.

Dans une centrale nucléaire, le réacteur nucléaire est immergé dans l'eau d'une piscine comprenant un bassin de réacteur recevant le réacteur nucléaire lui-même, ainsi qu'un bassin d'entreposage prévu pour l'entreposage et la manutention des assemblages de combustible nucléaire neufs avant leur insertion dans le coeur du réacteur nucléaire et des assemblages de combustible nucléaire irradiés après leur extraction du réacteur nucléaire.

Un pont roulant enjambant la piscine est déplaçable le long de rails pour effectuer le levage et le déplacement des assemblages de combustible nucléaire, notamment pour entreposer les assemblages de combustibles neufs dans le bassin d'entreposage, pour transférer les assemblages de combustible neufs du bassin d'entreposage dans le réacteur nucléaire et pour transférer les assemblages de combustible irradiés du réacteur nucléaire dans le bassin d'entreposage.

Il est possible de munir le pont roulant d'une passerelle destinée à recevoir des opérateurs, par exemple pour leur permettre de se rendre au-dessus de la piscine et d'effectuer des opérations de maintenance sur le réacteur nucléaire et/ou sur des assemblages de combustible nucléaires, neufs ou irradiés.

Il est possible de prévoir une passerelle mobile distincte et séparée du pont roulant, la passerelle étant également déplaçable le long de rails, qu'il s'agisse des mêmes rails que ceux du pont roulant ou de rails dédiés, la passerelle enjambant la piscine et étant destinée à recevoir des opérateurs pour leur permettre de se rendre au-dessus de la piscine pour effectuer des opérations de maintenance.

Cela nécessite néanmoins de prévoir une passerelle mobile en plus du pont roulant, cette passerelle ayant une certaine emprise sur l'espace relativement restreint disponible autour de la piscine, et qui est utilisé par exemple pour stocker du matériel nécessaire aux fonctionnement du réacteur nucléaire ou pour des opérations de maintenance courantes effectuées pendant que le réacteur nucléaire est en cours d'exploitation.

US5085824A divulgue un pont roulant pour le rechargement d'un réacteur nucléaire dont les ensembles de guidage sont commandés de manière à assurer un déplacement synchronisé des deux ensembles de guidage.

CN203820313U divulgue une plateforme pliable.

CH705953A2 divulgue une plateforme à encorbellement comprenant une plancher principal et un plancher d'extension monté coulissant par rapport au plancher principal.

Un de buts de l'invention est de proposer un système de plateforme comprenant une plateforme déplaçable au-dessus de la piscine d'une centrale nucléaire, qui facilite l'exploitation du réacteur nucléaire.

A cet effet, l'invention propose une plateforme selon la revendication 1.

Des caractéristiques optionnelles sont définies aux revendications 2 à 10.

L'invention concerne aussi un système de plateforme selon la revendication 11.

Une caractéristique optionnelle est définie à la revendication 12.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue en perspective d'une plateforme installée au-dessus d'une piscine dans une centrale nucléaire ;

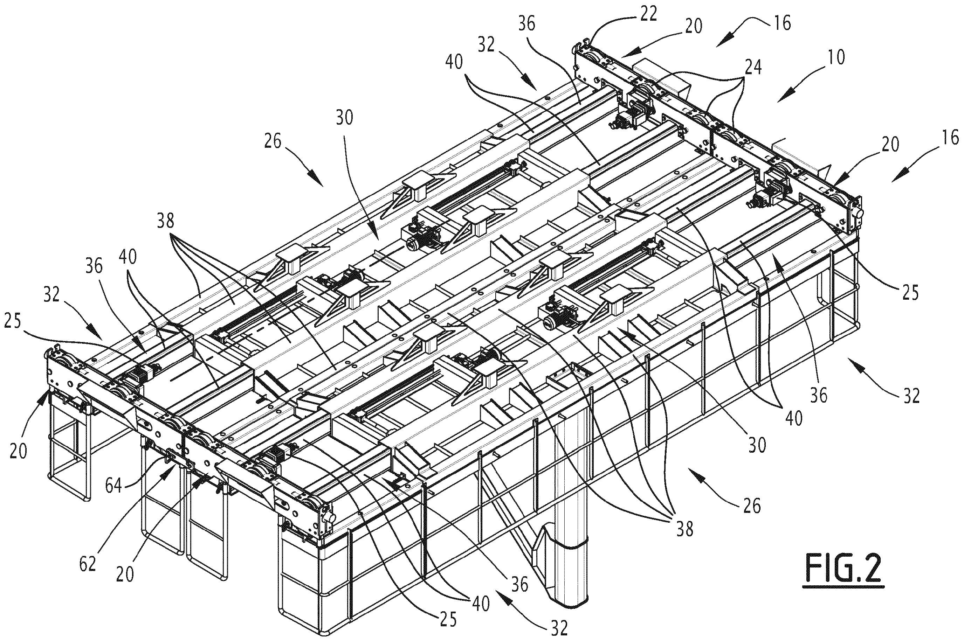

- la Figure 2 est une vue en perspective de la plateforme montrant le dessous de la plateforme ;
- la Figure 3 est une vue de détail de la Figure 2 illustrant un ensemble d'actionnement de la plateforme ;
- la Figure 4 est une vue schématique en coupe de la plateforme illustrant une partie d'extension d'un module de plateforme.
- la Figure 5 est une vue en perspective de la plateforme rangée dans un conteneur.

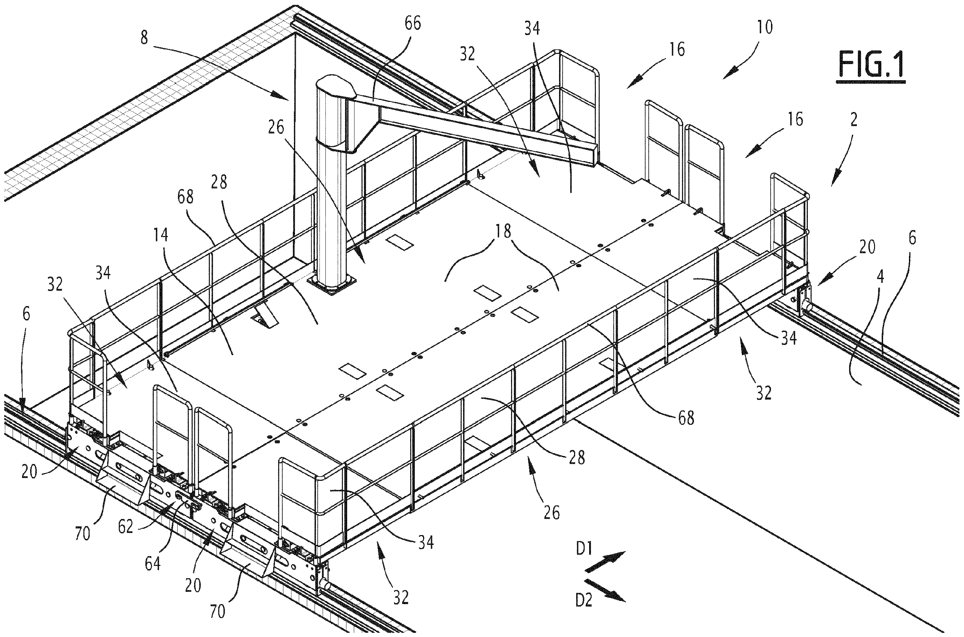

Comme illustré sur la Figure 1, une centrale nucléaire 2 possède une piscine 4 contenant de l'eau dans laquelle est immergé un réacteur nucléaire (non représenté). La piscine 4 comprend par exemple un bassin de réacteur recevant le réacteur nucléaire et/ou un bassin d'entreposage équipé pour recevoir des assemblages de combustible nucléaire, neufs et/ou irradiés.

La piscine 4 est entourée par une dalle qui est munie, sur des bords de la piscine 4, de deux rails 6 parallèles entre eux, situés de part et d'autre de la piscine 4.

Un système de plateforme 8 comprend une plateforme 10 qui enjambe la piscine 4 en étant mobile le long des deux rails 6. La plateforme 10 est par exemple posée sur les rails 6, qui dans ce cas supportent et guide la plateforme 10 le long des rails 6.

La plateforme 10 mobile le long des rails 6 peut être disposée à un endroit choisi au-dessus de la piscine 4. La plateforme 10 est par exemple configurée pour s'étendre au-dessus du bassin de réacteur et/ou du bassin d'entreposage.

Les rails 6 sont par exemple des rails de support et de guidage d'un pont roulant (non représenté) prévu pour le levage d'assemblages de combustible nucléaire. En variante, un tel pont roulant est guidé le long d'autres rails, distincts de rails 6 associés à la plateforme 10.

Les deux rails 6 sont écartés l'un de l'autre suivant une première direction D1 et s'étendent suivant une deuxième direction D2 perpendiculaire à la première direction D1. L'écartement entre les deux rails 6 est par exemple compris entre 8 m et 12 m.

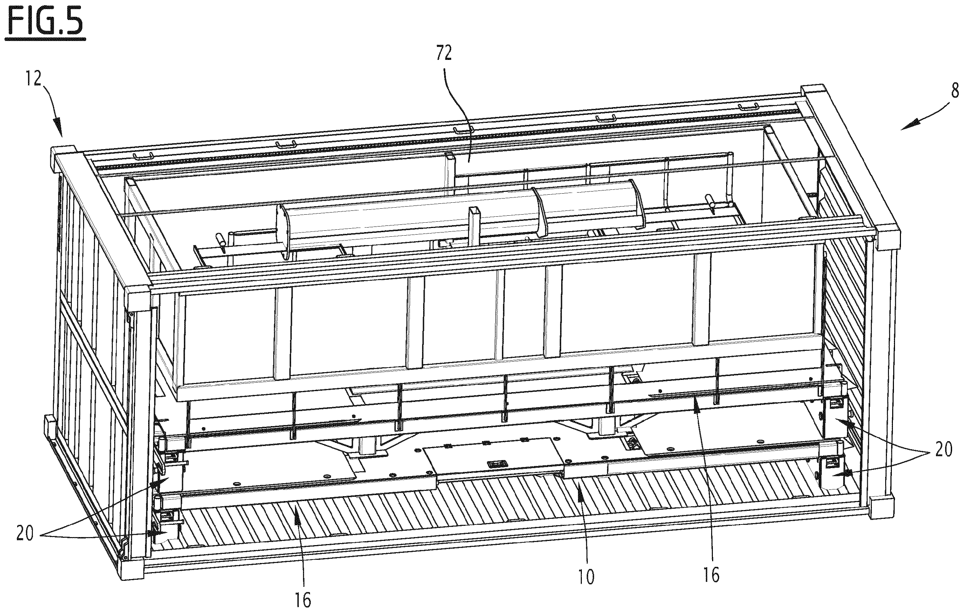

La plateforme 10 est déployable. Elle possède un état d'utilisation (Figure 1) dans lequel elle est propre à enjamber la piscine 4 en étant guidée par les rails, et un état de transport (Figures 5) dans lequel la plateforme 10 est propre à être rangée dans un conteneur de transport 12 du système de plateforme 8.

Un « conteneur de transport » désigne ici un conteneur du type « conteneur de transport maritime » ou « conteneur de transport multimodal », défini notamment par la norme ISO 668 ou la norme ISO 1496. Les conteneurs de transport les plus classiques possèdent généralement une longueur de 6.10m (20 pieds), 9.14m (30 pieds) ou 12.20m (40 pieds). Un conteneur de transport présente généralement une largeur d'environ 10 pieds (environ 3,048 m) et une hauteur également d'environ 10 pieds (environ 3,048 m).

Le conteneur de transport 12 du système de plateforme 8 présente avantageusement une longueur de 20 pieds (environ 6,096 m)

Comme visible sur la Figure 1, la plateforme 10 possède un plancher de plateforme 14 pour recevoir des opérateurs et/ou pour le stockage de matériel. Des opérateurs peuvent utiliser la plateforme 10 pour se positionner au-dessus de la piscine 4 pour réaliser des opérations de maintenance sur le réacteur nucléaire et/ou sur des assemblages de combustible nucléaire.

La plateforme 10 configurée pour être rangée dans un conteneur de transport 12 de 6.1 0m (20 pieds) peut être rangée et transportée de manière compact, tout en pouvant enjamber la piscine 4 avec un plancher de plateforme 14 présentant une aire suffisamment grande pour recevoir des opérateurs et/ou pour le stockage de matériel.

Le stockage de matériel sur le plancher de plateforme 14 permet d'éviter de stocker ce matériel autour de la piscine 4 pour limiter l'encombrement de cette zone, en particulier lors d'opérations de maintenance du réacteur nucléaire.

Le plancher de plateforme 14 s'étend suivant la première direction D1 et la deuxième direction D2. Le plancher de plateforme 14 est sensiblement parallèle au plan défini par la première direction D1 et la deuxième direction D2.

La plateforme 10 comprend au moins un module de plateforme 16, chaque module de plateforme 16 possédant un plancher de module 18 définissant au moins une partie du plancher de plateforme 14.

La plateforme 10 comprend par exemple au moins deux modules de plateforme 16 configurés pour être disposés côte-à-côte et connectés pour former la plateforme 10. Les modules de plateforme 16 sont disposés côte-à-côte suivant la deuxième direction D2. Chaque module de plateforme 16 définit un tronçon de la plateforme 10 suivant la deuxième direction D2, i.e. la direction d'extension des rails 6.

Lorsque les modules de plateforme 16 sont disposés côte à côte, leurs planchers de modules 18 définissent ensemble le plancher de plateforme 14. En particulier, chaque plancher de module 18 définit un tronçon du plancher de plateforme 14 suivant la deuxième direction D2, i.e. la direction d'extension des rails 6.

La plateforme 10 comprend par exemple exactement deux modules de plateforme 16 disposés côte à côte et jumelés. Le plancher de module 18 de chaque module de plateforme 16 forme ainsi environ la moitié du plancher de plateforme 14.

Le plancher de module 18 de chaque module de plateforme 16 présente, suivant la deuxième direction D2, une dimension comprise par exemple entre 2,50 m et 3,00 m. Ceci facilite le stockage du module de plateforme 16 dans un conteneur de transport 12.

A l'état d'utilisation de la plateforme 10 (Figure 1), les modules de plateforme 16 sont assemblés, de telle manière qu'ils se déplacent solidairement le long des rails 6. A l'état de transport (Figure 5), les modules de plateforme 16 sont séparés pour être rangés dans le conteneur de transport 12.

Chaque module de plateforme 16 possède deux ensembles de guidage 20. Chaque ensemble de guidage 20 est configuré pour coopérer avec un rail 6 respectif parmi les deux rails 6, pour guider le module de plateforme 16 le long des rails 6. De préférence, chaque ensemble de guidage 20 est configuré pour prendre appui sur le rail 6 correspondant. Les rails 6 guident, et éventuellement supportent, chaque module de plateforme 16.

Chaque ensemble de guidage 20 comprend par exemple un châssis 22 sur lequel sont montées à rotation des roues 24 par l'intermédiaire desquelles l'ensemble de guidage 20 roule sur les rails 6 correspondants lorsque le module de plateforme 16 est posé sur les rails 6.

En option, chaque ensemble de guidage 20 comprend un actionneur d'entraînement 25 agencé pour assurer la propulsion de l'ensemble de guidage 20 le long du rail 6 correspondant.

L'actionneur d'entraînement 25 est par exemple un moteur, en particulier un moteur électrique.

L'actionneur d'entraînement 25 est par exemple configuré pour entraîner en rotation au moins une des roues 24 de l'ensemble de guidage 20

Les deux ensembles de guidage 20 de chaque module de plateforme 16 sont écartés l'un de l'autre suivant la première direction D1.

Chaque module de plateforme 16 possède une configuration de rangement et une configuration d'utilisation. La configuration de rangement correspond à l'état de transport de la plateforme 10 et la configuration d'utilisation correspond à l'état d'utilisation de la plateforme 10.

Chaque module de plateforme 16 est extensible suivant la première direction D1 pour passer de la configuration de rangement à la configuration d'utilisation.

En configuration de rangement, les deux ensembles de guidage 20 sont rapprochés suivant la première direction D1, et en configuration d'utilisation, les deux ensembles de guidage 20 sont éloignés suivant la première direction D1.

En configuration de rangement, l'écartement entre les deux ensembles de guidage 20 est strictement inférieur à celui entre les deux rails 6, et, en configuration d'utilisation, l'écartement entre les deux ensembles de guidage 20 correspond à celui entre les deux rails 6, de telle manière que les ensembles de guidage 20 puissent coopérer avec les deux rails 6.

En configuration de rangement, chaque module de plateforme 16 possède une longueur (prise suivant la première direction D1 correspondant à la direction suivant laquelle les ensembles de guidage 20 sont espacés), qui est strictement inférieure à la longueur disponible à l'intérieur du conteneur de transport 12. Cette longueur disponible est d'environ 5,90 m pour un conteneur de transport 12 de 6.1 0m (20 pieds).

Par ailleurs, chaque module de plateforme 16 présente une largeur (prise suivant la deuxième direction D2 correspondant à la direction de déplacement des ensembles de guidage 20 le long des rails 6) qui est strictement inférieure à la largeur disponible à l'intérieur du conteneur de transport 12. Cette largeur disponible est d'environ 2,35 m pour un conteneur de transport 12.

Ceci permet le stockage de chaque module de plateforme 16 dans le conteneur de transport 12, et l'empilement des modules de plateforme 16 les uns sur les autres.

Chaque module de plateforme 16 comprend une partie principale 26, comprenant un plateau principal 28 porté par une structure principale 30, et au moins une partie d'extension 32, chaque partie d'extension 32 comprenant un plateau d'extension 34 et un des ensemble de guidage 20 portés par une structure d'extension 36.

Chaque structure d'extension 36 est montée coulissante suivant la première direction D1 sur la structure principale 30 de manière à modifier l'écartement entre les deux ensembles de guidage 20.

Chaque structure d'extension 36 est montée coulissante par rapport à la structure principale 30 entre une position rétractée, correspondant à la configuration de rangement du module de plateforme 16, et une position étendue, correspondant à la configuration d'utilisation du module de plateforme 16.

En configuration d'utilisation, le plateau principal 28 et chaque plateau d'extension 34 forment chacun une partie respective du plancher de module 18.

Chaque structure d'extension 36 porte un ensemble de guidage 20, de sorte que le déplacement de la structure d'extension 36 par rapport à la structure principale 30 modifie l'écartement entre les deux ensembles de guidage 20.

En position rétractée de la structure d'extension 36, l'ensemble de guidage 20 porté par cette structure d'extension 36 est ramené contre la partie principale 26. En position étendue de la structure d'extension 36, l'ensemble de guidage 20 porté par cette structure d'extension 36 est éloigné de la partie principale 26.

Chaque module de plateforme 16 comprend par exemple deux parties d'extension 32 suitées de part et d'autre de la partie principale 26 suivant la première direction D1, chaque partie d'extension 32. En configuration de rangement, les deux structures d'extension 36 sont dans leurs positions rétractées, et, en configuration d'utilisation, les deux structures d'extension 36 sont dans leurs positions déployées.

Dans un autre exemple de réalisation, chaque module de plateforme 16 possède une seule partie d'extension 32, un des deux ensembles de guidage 20 étant porté par la structure d'extension 36 de cette partie d'extension 32 et l'autre étant monté fixe sur la structure principale 30. La structure d'extension 36 est alors prévue pour s'étendre d'un côté de la partie principale 26, l'ensemble de guidage 20 porté par la partie principale 26 étant situé du côté opposé de la partie principale 26.

La structure principale 30 comprend par exemple au moins une poutre principale 38 s'étendant suivant la première direction D1. La structure principale 30 comprend par exemple plusieurs poutres principales 38 parallèles s'étendant suivant la première direction D1. La structure principale 30 comprend ici quatre poutres principales 38.

Chaque structure d'extension 36 possède par exemple au moins une poutre d'extension 40 montée coulissante suivant la première direction D1 sur la structure principale 30.

Chaque poutre d'extension 40 est par exemple montée de manière télescopique sur une poutre principale 38. L'ensemble de guidage 20 de la partie d'extension 32 est porté à l'extrémité de chaque poutre d'extension 40 qui est opposée à la partie principale 26.

Dans un exemple de réalisation, la structure d'extension 36 possède une poutre d'extension 40 respective associée à chaque poutre principale 38 et montée coulissante sur cette poutre principale 38, en particulier montée de manière télescopique sur cette poutre principale 38.

La structure principale 30 comprend ici quatre poutres principales 38, incluant deux poutres principales 38 centrales situées entre deux poutres principales 38 latérales. Les poutres principales 38 centrales présentent par exemple une section transversale plus forte que celle des poutres principales 38 latérales. Chaque structure d'extension 36 possède quatre poutres d'extension 40, chaque poutre d'extension 40 étant montée de manière télescopique sur une poutre principale 38 respective.

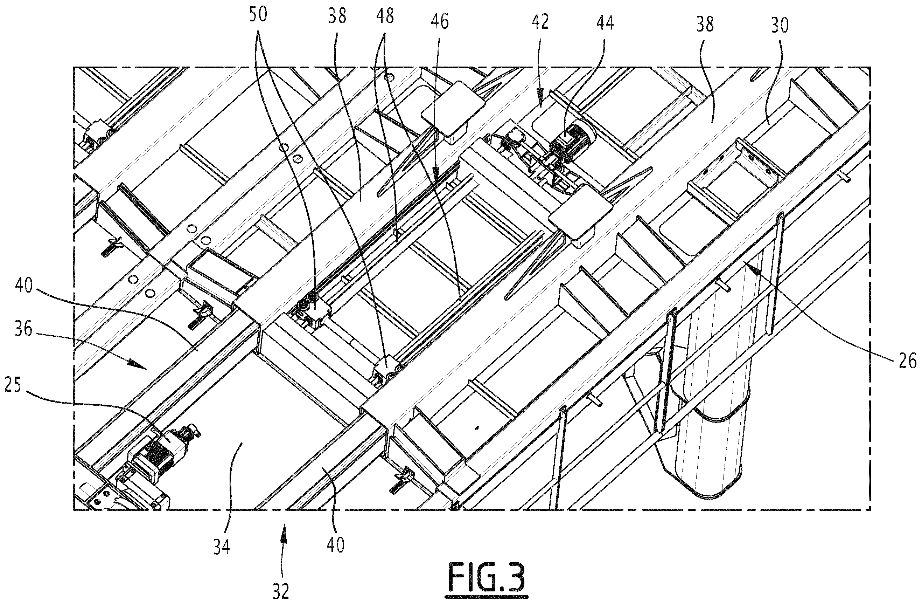

Comme visible sur la Figure 3, chaque module de plateforme 16 possède avantageusement au moins un ensemble d'actionnement 42 permettant de faire passer le module de plateforme 16 de la configuration de rangement à la configuration d'utilisation, et inversement.

Chaque ensemble d'actionnement 42 est configuré pour déplacer la structure d'extension 36 d'au moins une partie d'extension 32 entre sa position rétractée et sa position étendue.

Dans un exemple de réalisation, chaque module de plateforme 16 possède un ensemble d'actionnement 42 respectif associé à chaque partie d'extension 32, cet ensemble d'actionnement 42 étant configuré pour déplacer la structure d'extension 36 de cette partie d'extension 32 entre sa position rétractée et sa position étendue.

Dans un autre exemple de réalisation, chaque module de plateforme 16 possède un seul ensemble d'actionnement 42 configuré pour déplacer les structures d'extension 36 de deux parties d'extension 32 entre leurs positions rétractées et leurs positions étendues respectives.

Chaque ensemble d'actionnement 42 comprend un actionneur 44 et une transmission 46 configurée pour transmettre un mouvement généré par l'actionneur 44 à chaque structure d'extension 36 actionnée par cet ensemble d'actionnement 42.

L'actionneur 44 de chaque ensemble d'actionnement 42 est par exemple un moteur, en particulier un moteur électrique.

La transmission 46 de chaque ensemble d'actionnement 42 comprend par exemple au moins un ensemble vis/écrou comprenant une vis 48 et un écrou 50, la vis 48 s'étendant suivant la première direction D1, et l'actionneur 44 étant couplé à l'un de la vis 48 et de l'écrou 50 pour l'entraîner en rotation, de manière à déplacer l'autre en translation.

Dans un exemple de réalisation, la vis 48 de chaque ensemble vis/écrou est montée rotative sur la structure principale 30, et l'écrou 50 est monté sur la structure d'extension 36, la rotation de la vis 48 provoquée par l'actionneur 44 provoquant le déplacement de l'écrou 50 le long de la vis 48 et par conséquent le coulissement de la structure d'extension 36 par rapport à la structure principale 30.

Dans un exemple de réalisation dans lequel la partie d'extension 32 comprend au moins deux poutres d'extension 40, la transmission 46 comprend par exemple deux ensembles vis/écrou, chacun étant interposé entre l'actionneur 44 et une poutre d'extension 40 respective pour l'entraînement de cette poutre d'extension 40 en translation, les deux poutres d'extension 40 étant ainsi entraînées en translation à l'aide du même actionneur 44.

Chaque plateau d'extension 34 est configuré pour prolonger le plateau principal 28 en étant supporté par la structure d'extension 36 correspondante. En configuration d'utilisation, chaque plateau d'extension 34 s'étend entre l'ensemble de guidage 20 porté par la partie d'extension 36 et le plateau principal 38.

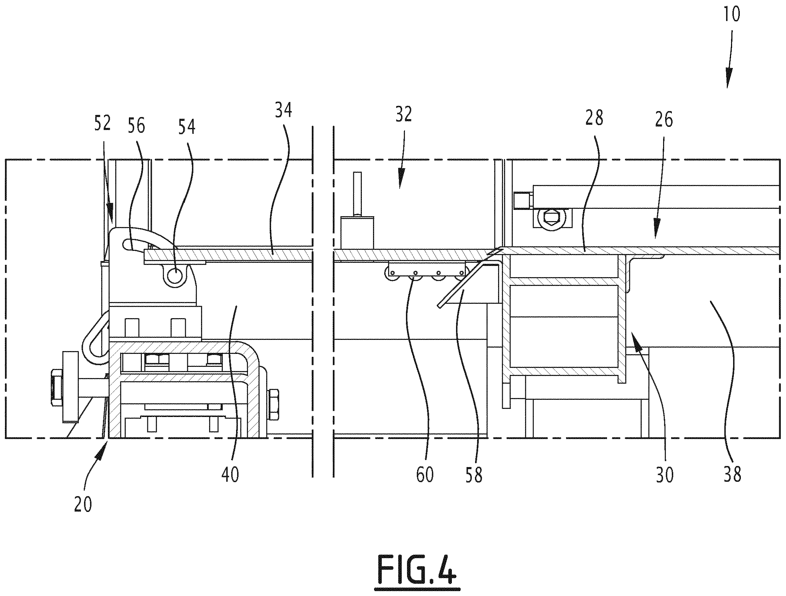

Comme visible sur le Figure 4, chaque plateau d'extension 34 est par exemple monté sur la structure d'extension 36 correspondante de manière à passer au-dessus du plateau principal 28 lors de la rétraction de la structure d'extension 36, la structure d'extension 36 passant au-dessous du plateau principal 28.

A cet effet, chaque plateau d'extension 34 a son extrémité adjacente à l'ensemble de guidage 20 qui est liée à la structure d'extension 36 ou au châssis 22 de l'ensemble de guidage 20 par au moins une liaison 52 de manière à autoriser un déplacement vers le haut du plateau d'extension 34 par rapport à la structure d'extension 36.

Dans un exemple de réalisation, la liaison 52 est formée par un coulisseau 54 reçu coulissant dans un guide 56 présentant une extrémité basse et une extrémité haute. Lorsque le coulisseau 54 est à l'extrémité basse, la plateau d'extension 34 en posé sur la structure d'extension 36. Lorsque le coulisseau 54 et à l'extrémité haute, le plateau d'extension 34 est espacé verticalement de la structure d'extension 36.

Le guide 56 présente par exemple une forme en arc de cercle, l'extrémité basse du guide 56 étant décalée horizontalement vers la partie centrale 28 par rapport à l'extrémité haute.

L'extrémité de chaque plateau d'extension 34 adjacente au plateau principal 28 est en appui simple sur la structure d'extension 36 correspondante.

Lorsque la structure d'extension 36 est rétractée, l'extrémité du plateau d'extension 34 adjacente au plateau principal 28 passe par-dessus celui-ci, l'autre extrémité pouvant se décaler vers le haut grâce à la liaison 52 configurée à cet effet, pour faciliter le passage du plateau d'extension 34 au-dessus du plateau principal 28.

Optionnellement le module de plateforme 16 possède au moins une rampe 58 associée à chaque plateau d'extension 34 et disposée pour relever l'extrémité du plateau d'extension 34 adjacente au plateau principal 28 au-dessus de ce dernier. Chaque rampe 58 est par exemple fixée sur la structure principale 30.

En option, le module de plateforme 16 possède un dispositif de roulement 60 fixé sur le plateau d'extension 34 est configuré pour rouler sur une rampe 58 correspondante pour relever l'extrémité du plateau d'extension 34 adjacente au plateau principal 28 au-dessus de ce dernier.

Chaque dispositif de roulement 60 comprend des éléments roulants, tels que des roues, des galets ou des rouleaux, par l'intermédiaire desquels la plaque d'extension 34 prend appui sur la rampe 58.

En revenant à la Figure 1, la plateforme 10 possède au moins un dispositif d'assemblage 62, chaque dispositif d'assemblage 62 permettant de lier deux modules de plateforme 16 adjacents, de telle manière que les modules de plateforme 16 se déplacent solidairement le long des rails 6.

Chaque dispositif d'assemblage 62 comprend par exemple une plaque d'assemblage 64 munies des lumières recevant des tiges d'assemblage fixées aux modules de plateforme 16. Les plaques d'assemblage 64 sont ici disposées sur le côté des ensembles de guidage 20.

Le système de plateforme 8 possède avantageusement des équipements amovibles, propre à être montés de manière amovible sur la plateforme 10.

Le système de plateforme 8 comprend avantageusement un outil de levage 66 amovible configuré pour être monté sur la plateforme. L'outil de levage 66 se présente par exemple sur la forme d'une potence, possédant un mât et une flèche montée sur le mât.

Le système de plateforme possède par exemple des garde-corps amovibles 68 configurés pour être montés sur la plateforme 10, à la périphérie du plancher de plateforme 4, éventuellement en laissant des ouvertures d'accès permettant d'accéder à la plateforme à partir du bord de la piscine 4.

Le système de plateforme comprend par exemple un ou plusieurs marchepied(s) 70 amovible(s). Chaque marchepied 70 facilite la montée sur la plateforme 10 pour des opérateurs.

La Figure 5 illustre la plateforme 10 rangée dans le conteneur de transport 12. Deux panneaux du conteneur de transport 12 sont omis afin de rendre visible la plateforme 10 rangée dans le conteneur 12.

Comme illustré sur la Figure 5, dans un état rangé de la plateforme, les modules de plateforme 16 sont séparés, chaque module de plateforme 16 étant mis en configuration de rangement, chaque module de plateforme étant disposé dans le conteneur de transport 12. Plus spécifiquement, les modules de transport 16 sont superposé(s) l'un sur l'autre ou les uns sur les autres.

Avantageusement, le système de plateforme 8 comprend un bac de rangement 72, le bas de rangement étant prévu pour être inséré à l'intérieur du conteneur de transport 12 en étant superposé avec les modules de plateforme 16, et pour recevoir par exemple des équipements amovibles (outil de levage, garde-corps, marchepied(s)) destiné à être montés sur les modules de plateforme 16.

En fonctionnement normal du réacteur nucléaire, le système de plateforme 8 n'est pas installé et n'est éventuellement pas sur le site de la centrale nucléaire.

Lorsque des opérations de maintenance sont prévues sur le réacteur nucléaire et que l'exploitant souhaite disposer d'une plateforme pendant ces opérations de maintenance, par exemple pour disposer d'une surface de stockage supplémentaire et/ou permettre à des opérateurs de se rendre au-dessus de la piscine 4, le système de plateforme 8, comprenant la plateforme 10 à l'état rangé et stockée dans le conteneur de transport 12, est amené sur le site (Figure 5).

Les modules de plateforme 16 en configuration de rangement sont sortis du conteneur de transport 12. Chaque module de plateforme 16 a donc ses parties d'extension 32 qui sont dans leurs positions rétractées et ses ensembles de guidage 20 qui sont en position rapprochée.

Chaque module de plateforme 16 est ensuite mis en configuration d'utilisation, en déplaçant la structure d'extension 36 de chaque partie d'extension 32 de sa position rétractée à sa position étendue, par exemple à l'aide de l'ensemble d'actionnement 42 associé. Les ensembles de guidage 20 sont ainsi écartés, de manière à présenter un écartement correspondant à celui des rails 6.

Ce faisant, chaque plaque d'extension 34, initialement situées sur la plaque principale 28, se déplace conjointement à l'ensemble de guidage 20 associé et vient se positionner à côté de la plaque principale 28, en appui sur la structure d'extension 36 correspondante.

Les modules de plateforme 16 sont disposés sur les rails 6 et liés entre eux à l'aide des dispositifs d'assemblage 62, formant ainsi la plateforme 10.

La plateforme 10 est ensuite équipée de ses équipements amovibles (outil de levage 66, garde-corps 68, marchepied(s) 70) (Figure 1).

Pour le démontage et le rangement du système de plateforme 8, les opérations inverses sont réalisées.

Lors d'un arrêt de tranche du réacteur nucléaire, le fonctionnement du réacteur nucléaire est interrompu, et l'exploitant procède au déchargement d'assemblages de combustible irradiés, au chargement d'assemblages de combustible neuf, au repositionnement de certains assemblages de combustible irradiés qui sont maintenus dans le réacteur nucléaire, et à des opérations de maintenance.

Lors d'un arrêt de tranche, il manque généralement de place sur la dalle entourant la piscine de la centrale nucléaire, pour permettre la co-activité et réduire la durée de l'arrêt de tranche.

Le système de plateforme 8 permet d'apporter un gain de surface disponible au niveau de la dalle à l'exploitant pendant les arrêts de tranche lui permet d'optimiser l'utilisation du matériel de maintenance, en particulier du pont roulant.

Le système de plateforme 8 permet d'augmenter la surface exploitable en couvrant partiellement la piscine 4 sans interférer avec les opérations d'arrêt de tranche.

La plateforme 10 peut être installée et démontée rapidement. Elle est mobile le long des rails 6 pour permettre l'accès aux éléments stockés en fond de piscine, comme par exemples des assemblages de combustible, neufs ou irradiés.

Le système de plateforme 8 à l'état démonté et rangé dans le conteneur de transport 12 est compact, ce qui réduit le coût de transport et e stockage.

Les modules de transport 16 avec une configuration de rangement et une configuration d'utilisation facilitent le transport en permettant un rangement compact, et l'utilisation, en permettant un déploiement de la plateforme 10 pour son montage sur les rails 6 avec un écartement approprié entre les ensembles de guidage 20.

La plateforme 10 à l'état d'utilisation est de préférence prévue pour supporter une charge conséquente, par exemple pour du stockage de matériel et/ou pour offrir une surface de travail supplémentaire.

Avantageusement, la plateforme 10 à l'état d'utilisation présente un plancher de plateforme 14 d'une surface d'au moins 20 m², en particulier une surface d'au moins 30 m², par exemple une surface d'environ 32m².

Avantageusement, la plateforme 10 à l'état d'utilisation présente une capacité de charge d'au moins 400kg/m², de préférence d'au moins 500kg/m², en particulier d'environ 600kg/m².

De préférence, la plateforme 10 est prévue pour prendre appui sur les rails 6 du pont roulant prévu pour la manutention des assemblages de combustible nucléaire. Ainsi, aucune modification de la centrale nucléaire n'est nécessaire pour permettre l'utilisation du système de plateforme 8.

## Revendications

1. Plateforme configurée pour enjamber une piscine (4) d'une centrale nucléaire en étant mobile le long de deux rails (6) parallèles disposés de part et d'autre de la piscine (4), la plateforme possédant un plancher de plateforme (14) pour la circulation d'opérateurs et/ou le stockage de matériel, la plateforme comprenant au moins un module de plateforme (16), chaque module de plateforme (16) possédant un plancher de module (18) définissant au moins une partie du plancher de plateforme (14) et deux ensembles de guidage (20), chaque ensemble de guidage (20) étant configuré pour coopérer avec un rail (6) respectif parmi lesdits rails (6) pour le guidage de la plateforme le long desdits rails (6),
la plateforme (16) étant **caractérisée en ce que**
chaque module de plateforme est extensible de manière à faire varier l'écartement entre les deux ensembles de guidages (20) du module de plateforme (16), les deux ensembles de guidage (20) étant rapprochés dans une configuration de rangement et éloignés dans une configuration d'utilisation.

2. Plateforme selon la revendication 1, dans laquelle chaque module de plateforme (16) comprend une partie principale (26), qui possède un plateau principal (28) porté par une structure principale (30), et au moins une partie d'extension (32) qui comprend un plateau d'extension (34) et un des ensemble de guidage (20) portés par une structure d'extension (36) montée coulissante par rapport à la structure principale pour passer de la configuration de rangement à la configuration d'utilisation.

3. Plateforme selon la revendication 2, dans laquelle, lors du passage de la configuration d'utilisation à la configuration de rangement de chaque module de plateforme (16), le plateau d'extension (32) de chaque partie d'extension (32) glisse sur le plateau principal (28).

4. Plateforme selon la revendication 3, dans laquelle le plateau d'extension (34) de chaque partie d'extension (32) est monté sur la structure d'extension (36) de manière que la structure d'extension (36) se rétracte sous le plateau principal (28), le plateau d'extension (34) passant par-dessus le plateau principal (28).

5. Plateforme selon l'une quelconque des revendications 2 à 4, dans laquelle chaque module de plateforme (16) comprend deux parties d'extension (32), la partie principale (26) étant située entre les deux parties d'extension (32) en configuration d'utilisation du module de plateforme (16).

6. Plateforme selon l'une quelconque des revendications 2 à 5, dans laquelle la structure d'extension (36) de chaque partie d'extension (32) comprend au moins une poutre d'extension (40) montée coulissante sur une poutre principale (38) de la structure principale (30).

7. Plateforme selon la revendication 6, dans laquelle chaque poutre d'extension est montée de manière télescopique sur la poutre principale correspondante.

8. Plateforme selon l'une quelconque des revendications 2 à 7, dans lequel chaque module de plateforme (16) comprend au moins un ensemble d'actionnement (42), chaque ensemble d'actionnement comprenant un actionneur (44) et une transmission (46) configurés pour faire passer le module de plateforme (16) de la configuration de rangement à la configuration d'utilisation et inversement.

9. Plateforme selon l'une quelconque des revendications précédentes, dans lequel chaque module de plateforme (16) comprend au moins un actionneur pour l'entraînement du module de plateforme (16) le long des rails (6).

10. Plateforme selon l'une quelconque des revendications précédentes, comprenant au moins deux modules de plateforme (16), en particulier exactement deux modules de plateforme (16), configurés pour être disposés côte-à-côte et assemblés pour former la plateforme (10).

11. Système de plateforme comprenant une plateforme selon l'une quelconque des revendications précédentes et un conteneur de transport (12), la plateforme (10) étant configurée pour son stockage dans le conteneur de transport (12), chaque module de plateforme (16) étant en configuration de rangement.

12. Système de plateforme selon la revendication 11, dans lequel, la plateforme comprenant au moins deux modules de plateforme (16), ces derniers étant prévus pour être rangés en configuration de rangement dans le conteneur en étant empilés l'un sur l'autre ou les uns sur les autres.

## Patentansprüche

1. Plattform, die ausgelegt ist, um ein Becken (4) eines Kernkraftwerks zu überspannen, indem sie entlang zweier paralleler Schienen (6), die auf beiden Seiten des Beckens (4) angeordnet sind, beweglich ist, wobei die Plattform einen Plattformboden (14) für die Bewegung von Bedienern und/oder die Lagerung von Material besitzt, wobei die Plattform mindestens ein Plattformmodul (16) umfasst, wobei jedes Plattformmodul (16) einen Modulboden (18), der mindestens einen Teil des Plattformbodens (14) definiert, und zwei Führungsanordnungen (20) besitzt, wobei jede Führungsanordnung (20) ausgelegt ist, um mit einer entsprechenden Schiene (6) der Schienen (6) für die Führung der Plattform entlang der Schienen (6) zusammenzuwirken,
wobei die Plattform (16) **dadurch gekennzeichnet ist, dass** jedes Plattformmodul derart ausziehbar ist, dass der Abstand zwischen den beiden Führungsanordnungen (20) des Plattformmoduls (16) verändert wird, wobei die beiden Führungsanordnungen (20) in einer Lagerkonfiguration beieinander liegen und in einer Benutzungskonfiguration voneinander entfernt sind.

2. Plattform nach Anspruch 1, wobei jedes Plattformmodul (16) einen Hauptteil (26) mit einer Hauptplatte (28), die von einer Hauptstruktur (30) getragen wird, und mindestens einen Erweiterungsteil (32) mit einer Erweiterungsplatte (34) und einer der Führungsanordnungen (20) umfasst, die von einer Erweiterungsstruktur (36) getragen werden, die in Bezug auf die Hauptstruktur gleitend angebracht ist, um aus der Lagerkonfiguration in die Benutzungskonfiguration zu wechseln.

3. Plattform nach Anspruch 2, wobei beim Wechsel aus der Benutzungskonfiguration in die Lagerkonfiguration jedes Plattformmoduls (16) die Erweiterungsplatte (32) jedes Erweiterungsteils (32) auf der Hauptplatte (28) gleitet.

4. Plattform nach Anspruch 3, wobei die Erweiterungsplatte (34) jedes Erweiterungsteils (32) derart an der Erweiterungsstruktur (36) angebracht ist, dass die Erweiterungsstruktur (36) unter die Hauptplatte (28) eingezogen wird, wobei die Erweiterungsplatte (34) über die Hauptplatte (28) geführt wird.

5. Plattform nach einem der Ansprüche 2 bis 4, wobei jedes Plattformmodul (16) zwei Erweiterungssteile (32) umfasst, wobei sich der Hauptteil (26) in der Benutzungskonfiguration des Plattformmoduls (16) zwischen den beiden Erweiterungsteilen (32) befindet

6. Plattform nach einem der Ansprüche 2 bis 5, wobei die Erweiterungsstruktur (36) jedes Erweiterungsteils (32) mindestens einen Erweiterungsbalken (40) umfasst, der auf einem Hauptbalken (38) der Hauptstruktur (30) gleitend angebracht ist.

7. Plattform nach Anspruch 6, wobei jeder Erweiterungsbalken teleskopisch an dem entsprechenden Hauptbalken angebracht ist.

8. Plattform nach einem der Ansprüche 2 bis 7, wobei jedes Plattformmodul (16) mindestens eine Betätigungsanordnung (42) umfasst, wobei jede Betätigungsanordnung einen Aktuator (44) und ein Getriebe (46) umfasst, die derart ausgelegt sind, dass sie das Plattformmodul (16) aus der Lagerkonfiguration in die Benutzungskonfiguration und umgekehrt verlagern.

9. Plattform nach einem der vorhergehenden Ansprüche, wobei jedes Plattformmodul (16) mindestens einen Aktuator zum Antreiben des Plattformmoduls (16) entlang der Schienen (6) umfasst.

10. Plattform nach einem der vorhergehenden Ansprüche, umfassend mindestens zwei Plattformmodule (16), insbesondere genau zwei Plattformmodule (16), die derart ausgelegt sind, dass sie nebeneinander angeordnet und zur Bildung der Plattform (10) zusammengefügt werden.

11. Plattformsystem mit einer Plattform nach einem der vorhergehenden Ansprüche und einem Transportbehälter (12), wobei die Plattform (10) zu ihrer Lagerung in dem Transportbehälter (12) ausgelegt ist, wobei jedes Plattformmodul (16) in Lagerkonfiguration ist.

12. Plattformsystem nach Anspruch 11, wobei die Plattform mindestens zwei Plattformmodule (16) umfasst, wobei letztere derart beschaffen sind, dass sie in Lagerkonfiguration im Behälter verstaut werden, indem sie übereinander oder aufeinander gestapelt werden.

## Claims

1. A platform configured to span a pool (4) of a nuclear power plant with being movable along two parallel rails (6) disposed on either side of the pool (4), the platform having a platform floor (14) for operator traffic and/or equipment storage, the platform comprising at least one platform module (16), each platform module (16) having a module floor (18) defining at least a portion of the platform floor (14) and two guide assemblies (20), each guide assembly (20) being configured to mate with a respective one of said rails (6) for guiding the platform along said rails (6), the platform being **characterized in that** each platform module is extendable so as to vary the spacing between the two guide assemblies (20) of the platform module (16), the two guide assemblies (20) being moved towards each other in a storage configuration and away from each other in a service configuration.

2. The platform according to claim 1, wherein each platform module (16) comprises a main part (26), which has a main plate (28), carried by a main structure (30) and at least one extension part (32) which comprises an extension plate (34) and one of the guide assemblies (20) carried by an extension structure (36) slidably mounted relative to the main structure to move from the storage configuration to the service configuration.

3. The platform according to claim 2, wherein, when moving from the service configuration to the storage configuration of each platform module (16), the extension plate (32) of each extension part (32) slides over the main plate (28).

4. The platform according to claim 3, wherein the extension plate (34) of each extension part (32) is mounted on the extension structure (36) such that the extension structure (36) retracts under the main plate (28) with the extension plate (34) passing over the main plate (28).

5. The platform according to any one of claims 2 to 4, wherein each platform module (16) comprises two extension parts (32), the main part (26) being located between the two extension parts (32) in the service configuration of the platform module (16).

6. The platform according to any one of claims 2 to 5, wherein the extension structure (36) of each extension part (32) comprises at least one extension beam (40) slidably mounted on a main beam (38) of the main structure (30).

7. The platform according to claim 6, wherein each extension beam is telescopically mounted to the corresponding main beam.

8. The platform according to any one of claims 2 to 7, wherein each platform module (16) comprises at least one actuator assembly (42), each actuator assembly comprising an actuator (44) and a transmission (46) configured to move the platform module (16) from the storage configuration to the service configuration and vice versa.

9. The platform according to any of the preceding claims, wherein each platform module (16) comprises at least one actuator for driving the platform module (16) along the rails (6).

10. The platform according to any of the preceding claims, comprising at least two platform modules (16), in particular exactly two platform modules (16), configured to be arranged side by side and assembled to form the platform (10).

11. A platform system comprising a platform according to any of the preceding claims and a freight container (12), the platform (10) being configured for storage in the freight container (12), each platform module (16) being in a storage configuration.

12. A platform system according to claim 11, wherein the platform comprises at least two platform modules (16), the latter being adapted to be stored in a storage configuration in the container by being stacked on top of each other.
